# EUROPÄISCHE PATENTSCHRIFT

(11) **EP 3 935 000 B1**
(45) Veröffentlichungstag und Bekanntmachung des Hinweises auf die Patenterteilung: **26.10.2022**
(21) Anmeldenummer: 20706355.3
(22) Anmeldetag: 02.03.2020
(51) Int. Cl.: B66B 19/00

(54) **MESSVORRICHTUNG ZUM VERMESSEN EINES AUFZUGSCHACHTS UND VERWENDUNG DER MESSVORRICHTUNG ZUM VERMESSEN EINES AUFZUGSCHACHTS**
MEASURING DEVICE FOR MEASURING AN ELEVATOR SHAFT AND USE OF THE MEASURING DEVICE FOR MEASURING AN ELEVATOR SHAFT
DISPOSITIF DE MESURE POUR MESURER UNE CAGE D'ASCENSEUR ET UTILISATION DU DISPOSITIF DE MESURE POUR MESURER UNE CAGE D'ASCENSEUR

(30) Priorität: 05.03.2019 EP 19160765
(43) Veröffentlichungstag der Anmeldung: 12.01.2022
(73) Patentinhaber: INVENTIO AG, 6052 Hergiswil (CH)
(72) Erfinder: ZIMMERLI, Philipp, 4624 Härkingen (CH); BITZI, Raphael, 6003 Luzern (CH)
(74) Vertreter: Inventio AG
(86) Internationale Anmeldenummer: PCT/EP2020/055405
(87) Internationale Veröffentlichungsnummer: WO 2020/178224

(56) Entgegenhaltungen:
- WO-A1-2009/073010
- WO-A1-2018/041815
- JP-A- 2018 054 346
- US-A1- 2018 215 588

## Beschreibung

Die vorliegende Erfindung betrifft eine Messvorrichtung, mit deren Hilfe ein Aufzugschacht vermessen werden kann. Ausserdem betrifft die Erfindung die Verwendung einer solchen Messvorrichtung zum Vermessen eines Aufzugschachts.

Eine Aufzuganlage verfügt im Allgemeinen über einen Aufzugschacht, innerhalb dessen eine Aufzugkabine sowie gegebenenfalls ein Gegengewicht vertikal verlagert werden können.

Beim Bau eines Gebäudes bzw. einer Installation einer Aufzuganlage in einem Gebäude muss regelmässig sichergestellt sein, dass der Aufzugschacht geometrischen und/oder bautechnischen Vorgaben innerhalb vorgegebener Toleranzbereiche entspricht. Beispielsweise sollte überprüft werden, dass Wände des Aufzugschachts innerhalb akzeptabler Toleranzen vertikal verlaufen, dass ein Querschnitt des Aufzugschachts entlang einer Höhenerstreckung des Aufzugschachts innerhalb akzeptabler Toleranzen gleich bleibt, etc.

Dementsprechend kann es erforderlich sein, während des Bauens des Gebäudes bzw. vor oder während der Installation der Aufzuganlage den Aufzugschacht präzise zu vermessen.

Herkömmlich werden zu diesem Zweck oft Schnüre, an deren unterem Ende ein Gewicht angebracht ist und die somit als Lot dienen, von einem oberen Aufhängungspunkt in dem Aufzugschacht vertikal herabhängen gelassen. In verschiedenen Höhen, d.h. beispielsweise im Bereich von Aufzugschachttüren in verschiedenen Stockwerken des Gebäudes, werden dann seitliche Abstände zwischen diesen Loten und Referenzpositionen an dem Aufzugschacht vermessen. Hierzu kann beispielsweise von einem Techniker ein Metermass von Hand an ein Lot angelegt werden und dann ein Abstand hin zu einer Referenzposition gemessen werden. Ein solches herkömmliches Vorgehen ist jedoch sehr arbeitsaufwändig und kann insbesondere bei hohen Aufzügen mehrere Stunden oder sogar Tage in Anspruch nehmen. Ausserdem erfordert es ein akkurates manuelles Arbeiten und ist daher fehleranfällig.

Es wurden Vorrichtungen entwickelt, um ein Ausmessen eines Aufzugschachts zumindest teilweise automatisieren zu können.

Beispielsweise ist in der JP 2005 098786 A eine Vorrichtung zum Messen von Abmessungen eines Aufzugschachts beschrieben, bei der ein Laserabstandsmessgerät zum Messen einer Distanz in einer horizontalen Ebene an einer Aufzugkabine befestigt ist und mit der Aufzugkabine vertikal durch den Aufzugschacht bewegt werden kann, um seitliche Abstände an verschiedenen Höhenpositionen messen zu können. Allerdings ist es bei einem solchen Ansatz notwendig, dass die Aufzuganlage bereits vollständig installiert ist. Vor einer Fertigstellung der Aufzuganlage existiert weder die Aufzugkabine noch ein Antrieb, um diese durch den Aufzugschacht zu bewegen.

In der WO 2009/073010 A1 sind Verfahren und Vorrichtungen zum Überwachen von Aufzugschächten beschrieben. Dabei kann eine Plattform mithilfe einer zuvor in dem Aufzugschacht zu montierenden Antriebsmaschine längs des Aufzugschachts verlagert werden und ein Abstandssensor kann dazu eingesetzt werden, einen lateralen Abstand zwischen einem Punkt An der Plattform und einer Wand des Aufzugschachts zu messen. Eine Installation einer solchen Vorrichtung in einem Aufzugschacht kann jedoch verhältnismässig aufwendig sein und/oder Messergebnisse betreffend Abmessungen des Aufzugschachts können in manchen Fällen nicht ausreichend präzise sein.

Die US 2018/215588 A1, WO 2009/073010 A1 und JP 2018 054346 A beschreiben ebenfalls Messvorrichtungen zum Vermessen eines Aufzugschachts.

Es kann unter anderem ein Bedarf an einer alternativen Messvorrichtung bestehen, welche einfach in einem Aufzugschacht eingesetzt werden kann und/oder mithilfe derer der Aufzugschacht zuverlässig und präzise vermessen werden kann und welche insbesondere sicher im Aufzugschacht verlagert werden kann. Ferner kann ein Bedarf an einer Möglichkeit einer Verwendung einer solchen Messvorrichtung zum Vermessen eines Aufzugschachts bestehen.

Einem solchen Bedarf kann durch den Gegenstand gemäss einem der unabhängigen Ansprüche entsprochen werden. Vorteilhafte Ausführungsformen sind in den abhängigen Ansprüchen sowie der nachfolgenden Beschreibung definiert.

Gemäss einem ersten Aspekt der Erfindung wird eine Messvorrichtung zum Vermessen eines Aufzugschachts vorgeschlagen. Die Messvorrichtung weist zwei seilartige, längliche und parallel zueinander verlaufende Führungselemente, eine Messplattform und eine Hebeeinrichtung auf. Jedes der Führungselemente ist hierbei jeweils an einem oberen Haltepunkt und an einem unteren Haltepunkt in dem Aufzugschacht fest angebracht und zwischen dem oberen Haltepunkt und dem unteren Haltepunkt verspannt. Die Messplattform verfügt über Führungseinrichtungen, welche die Messplattform seitlich an den Führungselementen abstützen und die Messplattform bei einer Verlagerungsbewegung in einer Verlagerungsrichtung parallel zu den Führungselementen führen. Die Messplattform verfügt über eine Distanzmesseinrichtung, um seitliche Abstände hin zu Seitenwänden des Aufzugschachts zu messen. Die Hebeeinrichtung ist dazu konfiguriert, die Messplattform in der Verlagerungsrichtung zu bewegen.

Erfindungsgemäss weisen die Führungseinrichtungen jeweils wenigstens drei Rollen auf, welche derart angeordnet sind, dass zumindest eine erste der Rollen während der Verlagerungsbewegung mit ihrer Umfangsoberfläche entlang einer ersten Oberfläche eines der Führungselemente rollt und zumindest eine zweite der Rollen während der Verlagerungsbewegung mit ihrer Umfangsoberfläche entlang einer der ersten Oberfläche entgegengesetzten zweiten Oberfläche desselben Führungselements rollt.

Gemäss einem zweiten Aspekt der Erfindung wird eine Verwendung der Messvorrichtung gemäss einer Ausführungsform des ersten Aspekts der Erfindung zum Ausmessen eines Aufzugschachts beschrieben.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Mit Ausführungsformen der hierin vorgeschlagenen Messvorrichtung soll es ermöglicht werden, einen im Bau befindlichen oder bereits fertiggestellten Aufzugschacht, in dem noch nicht notwendigerweise eine Aufzuganlage installiert ist, vermessen zu können. Beispielsweise soll festgestellt werden können, ob seitliche Wände des Aufzugschachts in einer angestrebten präzisen Weise senkrecht ausgerichtet sind und parallel zueinander verlaufen oder ob es zum Beispiel aufgrund von Mängeln oder Ungenauigkeiten beim Bauen zu übermässigen Abweichungen von einer vorgegebenen Geometrie, beispielsweise Abweichungen über einer Toleranz von zum Beispiel +/-25mm hinaus, gekommen ist. Solche Abweichungen können kostspielige Korrekturmassnahmen erfordern, die nach geeignetem Ausmessen des Aufzugschachts beispielsweise einem Bauherrn vermittelt werden müssen.

Die Vermessung des Aufzugschachts soll dabei einerseits mit möglichst wenig Aufwand durchführbar sein und einen hohen Grad an Automatisierung ermöglichen. Andererseits sollen Messergebnisse mit hoher Zuverlässigkeit bei gleichzeitig für diesen Einsatzzweck hoher Präzision im Zentimeterbereich erhalten werden können.

Für die hierin vorgeschlagene Messvorrichtung sollen Führungselemente innerhalb des Aufzugschachts zwischen einem oberen Haltepunkt und einem unteren Haltepunkt fest verspannt werden.

Die Führungselemente sollen dabei länglich und seilartig sein. Mit anderen Worten soll ein Führungselement einerseits auf Zug mit hohen Kräften belastbar sein und dabei seine Länge allenfalls geringfügig aufgrund von Dehnung verändern. Allerdings kann das Führungselement quer zu seiner Längserstreckung schon mittels geringer Kräfte biegbar sein. Das Führungselement kann ein Seil, ein Draht, ein Drahtgeflecht, ein Gurt, ein Riemen oder Ähnliches sein. Es ist auch möglich, dass das Führungselement auch quer zu seiner Längserstreckung steif ausgeführt ist. In diesem Fall kann das Führungselement beispielsweise als eine Schiene ausgeführt sein.

Der obere Haltepunkt und der untere Haltepunkt können beispielsweise an oder im Bereich einer Decke und an oder im Bereich eines Bodens des Aufzugschachts, d.h. an entgegengesetzten Enden des Aufzugschachts, angeordnet sein. Beispielsweise können als Haltepunkte dienende Befestigungsmittel an bzw. in einer Aufzugschachtdecke, einem Aufzugschachtboden oder einer Aufzugschachtwand befestigt sein. Ein Führungselement kann mit einem Ende an dem oberen Haltepunkt und mit einem entgegengesetzten Ende an dem unteren Haltepunkt befestigt werden und dann derart zwischen den beiden Haltepunkten verspannt werden, dass es quer zu seiner Längserstreckung nur noch allenfalls geringfügig verlagert werden kann. Die Haltepunkte sind dabei vorzugsweise derart positioniert, dass das Führungselement im Wesentlichen lotrecht, das heisst vertikal, verläuft. Benachbarte Führungselemente verlaufen dabei im Wesentlichen parallel zueinander. Dabei kann "im Wesentlichen" beispielsweise dahingehend verstanden werden, dass Abweichungen von einer vertikalen Ausrichtung bzw. einer Parallelität so gering sind, dass ihr Einfluss auf von der Messvorrichtung gelieferte Messergebnisse vernachlässigbar bleibt. Beispielsweise kann je nach Länge des zu vermessenen Aufzugschachts ein Toleranzbereich von +/-5°, +/-3° oder auch nur +/-1° oder weniger akzeptabel sein.

Die beschriebenen seilartigen Führungselemente sollen im anschliessenden Einsatz der Messvorrichtung dazu dienen, die Messplattform der Messvorrichtung während einer Verlagerungsbewegung, welche im Wesentlichen in einer Verlagerungsrichtung parallel zu den Führungselementen erfolgen soll, seitlich zu führen. Mit anderen Worten sollen die vorab in dem Aufzugschacht verspannten Führungselemente dazu dienen, die Messplattform daran zu hindern, übermässig von einem beabsichtigten, in der Regel geraden und vertikalen Verlagerungsweg durch den Aufzugschacht abzuweichen. Die Messplattform kann sich hierzu zwischen den beiden Führungselementen befinden und sich an diesen abstützen.

Hierzu verfügt die Messplattform über Führungseinrichtungen, mit denen sie sich an den Führungselementen in lateraler Richtung abstützt, während sie in vertikaler Verlagerungsrichtung durch den Aufzugschacht bewegt wird. Die Führungseinrichtungen können an der Messplattform fest angebracht sein und derart positioniert sein, dass sie die Führungselemente mechanisch kontaktieren und an diesen entlang bewegt werden können, insbesondere entlang rollen oder gleiten können. Dabei kann die über die Führungseinrichtungen bewirkte Abstützung beispielsweise ein laterales, das heisst im Wesentlichen horizontales, Schwingen der Messplattform innerhalb des Aufzugschachts verhindern.

Um die Messplattform in der Verlagerungsrichtung bewegen zu können, wird eine Hebeeinrichtung eingesetzt. Die Hebeeinrichtung kann beispielsweise in dem Aufzugschacht montiert werden, beispielsweise an dessen Decke, dessen Boden oder einer Seitenwand. Die Hebeeinrichtung kann dann wirkmässig mit der Messplattform verbunden sein, beispielsweise über ein seilartiges Verbindungselement. Indem die Hebeeinrichtung das Verbindungselement bewegt, kann somit die Messplattform innerhalb des Aufzugschachts verlagert werden.

Beispielsweise kann als Hebeeinrichtung eine einfache Seilwinde vorgesehen sein. Die Seilwinde kann beispielsweise in einem oberen Bereich des Aufzugschachts, insbesondere an einer Decke des Aufzugschachts, befestigt sein. Ein Seil der Seilwinde kann an der Messplattform befestigt sein. Durch Auf- und Abwickeln des Seiles kann die Seilwinde dann die Messplattform vertikal in bzw. entgegen der Verlagerungsrichtung bewegen.

Die beschriebene Anordnung aus Führungselementen in dem Aufzugschacht, einer an den Führungselementen geführten Messplattform und einer Hebeeinrichtung zum vertikalen Verlagern der Messplattform kann einerseits mit verhältnismässig einfachen und somit kostengünstigen Komponenten aufgebaut sein. Andererseits kann eine solche Anordnung einfach und insbesondere mit wenig Spezialkenntnissen in einem Aufzugschacht installiert werden und dann der Aufzugschacht damit vermessen werden. Insbesondere können die seilartigen Führungselemente auch von wenig geschultem Personal mit ausreichender Präzision innerhalb des Aufzugschachts montiert und verspannt werden. Anschliessend kann die Messplattform installiert werden und dann mit den Führungselementen derart geeignet zusammenwirken, dass ihre Bewegung entlang der Führungselemente mit ausreichender Präzision geführt ist. Die Hebeeinrichtung kann einfach aufgebaut sein und installiert werden. Insbesondere kann als Hebeeinrichtung eine simple Seilwinde eingesetzt werden, wie sie ohnehin oft beim Installieren einer Aufzuganlage in einem Aufzugschacht eingesetzt wird.

An der wie beschrieben ausgebildeten und installierten Messplattform ist eine Distanzmesseinrichtung vorgesehen. Diese Distanzmesseinrichtung ist dazu konfiguriert, seitliche Abstände insbesondere hin zu Seitenwänden des Aufzugschachts zu messen. Mit anderen Worten kann die Distanzmesseinrichtung eine Distanz zwischen sich selbst bzw. der Messplattform, an der sie installiert ist, einerseits, und einer Seitenwand des Aufzugschachts, andererseits, messen. Beispiele möglicher Distanzmesseinrichtungen und Details zu diesen werden weiter unten beschrieben. Indem seitliche Abstände hin zu Seitenwänden des Aufzugschachts an verschiedenen Höhenpositionen entlang des Aufzugschachts gemessen werden, kann dann der Aufzugschacht insgesamt vermessen werden und beispielsweise Rückschlüsse auf eine vertikale Ausrichtung seiner Seitenwände, auf Abweichungen von einer Parallelität seiner Seitenwände und/oder auf Abweichungen von Sollvorgaben hinsichtlich der Geometrie des Aufzugschachts gezogen werden.

An der Messplattform sind Rollen angebracht, die als Führungseinrichtungen dienen. Die Rollen können dabei direkt an der Messplattform befestigt sein oder mit dieser beispielsweise über Streben fest verbunden sein und derart angeordnet sein, dass, wenn die Messplattform in einer Sollposition beispielsweise zwischen den beiden Führungselementen angeordnet ist, die Umfangsoberflächen der Rollen jeweils in Kontakt mit einer Oberfläche einer der Führungselemente kommt. Wenn die Messplattform dann mithilfe der Hebeeinrichtung in der Verlagerungsrichtung verlagert wird, können die Rollen an den Führungselementen entlang rollen und somit die Bewegung der Messplattform parallel zu den Führungselementen führen. Ein Einsatz von leicht rotierbaren Rollen kann hierbei ein widerstandsarmes Verlagern der Messplattform ermöglichen, sodass diese von der Hebeeinrichtung mit wenig Kraftaufwand verlagert werden kann.

Jede der an der Messplattform angeordnete Führungseinrichtung verfügt über drei oder mehr Rollen, wobei die verschiedenen Rollen derart angeordnet sind, dass sie mit ihren Umfangsoberflächen jeweils an einem gemeinsamen Führungselement entlang rollen, dabei aber das Führungselement von entgegengesetzten Seiten her kontaktieren. Mit anderen Worten können die mehreren Rollen das jeweilige Führungselement zwischen sich aufnehmen, womit ein dauerhafter Kontakt zwischen den Rollen und dem Führungselement sichergestellt ist. Damit ist eine sichere Führung der Messeinrichtung gewährleistet, so dass beispielsweise ein Anschlagen der Messvorrichtung an einer Schachtwand wirkungsvoll verhindert wird. Dabei brauchen die Rollen sich bezüglich des Führungselements nicht direkt gegenüber zu liegen, d.h. die Rollen brauchen nicht zwingend auf einer selben Höhe angeordnet sein. Stattdessen können die Rollen zwar an entgegengesetzten Seiten des vertikal verlaufenden Führungselements angeordnet sein, aber in vertikaler Richtung versetzt zueinander sein, d.h. in verschiedenen Höhen angeordnet sein. Mit solchen Führungseinrichtungen mit mehreren Rollen kann die Messplattform besonders zuverlässig und sicher entlang der Führungselemente geführt werden.

Gemäss einer Ausführungsform ist an der Messplattform an gegenüberliegenden Seiten jeweils wenigstens eine Führungseinrichtung angeordnet.

Mit anderen Worten kann die Messplattform über wenigstens zwei Führungseinrichtungen verfügen, die in einer horizontalen Sicht auf die Messplattform gesehen links und rechts an der Messplattform angeordnet sind. Mit ihren Führungseinrichtungen kann sich die zwischen den beiden Führungselementen befindliche Messplattform somit an gegenüberliegenden Seiten an den beiden Führungselementen abstützen. Hierdurch kann eine stabile Führung der Messplattform während ihrer vertikalen Bewegung durch den Aufzugschacht bewirkt werden.

Gemäss einer konkreten Ausführungsform können die Umfangsoberflächen der Rollen der Führungseinrichtungen konkav ausgebildet sein.

Mit anderen Worten können die Rollen besonders effizient als Führungsrollen dienen, indem ihre Umfangsoberfläche nicht eben sondern nach innen hin zu einer Rotationsachse der jeweiligen Rolle in eingebuchtet ist. Ein Querschnittsprofil bzw. eine Krümmung der konkaven Umfangsoberfläche kann dabei derart gewählt sein, dass das Führungselement sich zumindest teilweise komplementär in die Umfangsfläche der jeweiligen Rolle einpasst und somit von Rändern der Rolle, welche an in Axialrichtung gegenüberliegenden Seiten der Rolle ausgebildet sind, geführt wird. Hierdurch kann erreicht werden, dass die Rollen, wenn sie entlang eines der Führungselemente rollen, nicht nur für eine Führung in einer Richtung orthogonal zu ihrer Umfangsoberfläche, sondern auch für eine Führung parallel zu der Umfangsoberfläche, sorgen können. Insgesamt kann hierdurch die Führung der Messplattform verbessert werden.

Gemäss einer Ausführungsform können die Führungselemente zumindest teilweise mit einem nicht-metallischen Material ausgebildet sein.

Anders ausgedrückt brauchen die Führungselemente nicht oder zumindest nicht vollständig aus Metall bestehen. Im Gegensatz zu beispielsweise Seilen oder Riemen, die als Tragmittel in einer Aufzuganlage fungieren und die hohen Zugbelastungen standhalten müssen, wirken auf die Führungselemente typischerweise wesentlich geringere Zugbelastungen. Insbesondere brauchen die Führungselemente lediglich derart auf Zug verspannt werden, dass laterale Bewegungen der Führungselemente auf ein tolerierbares Mass beschränkt werden. Dementsprechend brauchen die Führungselemente nicht notwendigerweise beispielsweise als Stahlseile ausgeführt sein. Stattdessen kann es genügen, ein Führungselement beispielsweise mit einem Kunststoffmaterial, einem Textilmaterial oder ähnlichem auszubilden. Solche Führungselemente aus nicht-metallischen Material können im Vergleich beispielsweise zu Stahlseilen kostengünstig sein und/oder ein deutlich geringeres Gewicht aufweisen und somit einfacher zu transportieren und zu installieren sein.

Gemäss einer Ausführungsform kann die Distanzmesseinrichtung dazu konfiguriert sein, die seitlichen Abstände hin zu den Seitenwänden des Aufzugschachts berührungslos zu messen.

Anders ausgedrückt kann als Distanzmesseinrichtung eine Einrichtung eingesetzt werden, die Abstände hin zu benachbarten Seitenwänden messen kann, ohne diese mechanisch zu kontaktieren. Dabei können verschiedene berührungslose Messtechnologien eingesetzt werden. Beispielsweise kann mithilfe eines Laserdistanzmessgeräts ein Laserstrahl hinzu einer Seitenwand gerichtet werden und durch Laufzeitmessungen, Messungen von Phasenverschiebungen oder ähnlichen Messungen auf einen Abstand der Seitenwand von dem Messgerät rückgeschlossen werden. Alternativ können beispielsweise Ultraschallsensoren dazu eingesetzt werden, Ultraschallsignale hin zu der Seitenwand auszusenden und durch Laufzeitmessungen oder Ähnliches auf den zu überbrückenden Abstand zu schliessen. Ein berührungsloses Messen der seitlichen Abstände kann einen verschleissarmen Betrieb der Messvorrichtung oder zumindest von deren Distanzmesseinrichtung ermöglichen.

Insbesondere kann gemäss einer Ausführungsform die Distanzmesseinrichtung dazu konfiguriert sein, die seitlichen Abstände in verschiedenen seitlichen Richtungen zu messen.

Mit anderen Worten kann vorgesehen sein, dass die Distanzmesseinrichtung seitliche Abstände nicht lediglich hinzu einer einzigen der Wände des Aufzugschachts messen kann, sondern vorzugsweise zu mehreren oder sogar allen Wänden des Aufzugschachts. Hierzu kann die Distanzmesseinrichtung über mehrere Messkomponenten verfügen, die Abstände in jeweils einer von mehreren seitlichen Richtungen messen können. Beispielsweise können vier Messkomponenten vorgesehen sein, die jeweils einen seitlichen Abstand hin zu einer der vier Wände eines Aufzugschachts messen können. Messrichtungen der Messkomponenten können dabei in rechten Winkeln relativ zueinander angeordnet sein. Alternativ kann die Distanzmesseinrichtung über eine Messkomponente verfügen, die in verschiedene Messrichtungen ausgerichtet werden kann. Beispielsweise kann die Messkomponente um eine vertikale Achse gedreht werden, um sie in verschiedene laterale Richtungen ausrichten zu können und dann seitliche Abstände hin zu gegenüberliegenden Seitenwänden messen zu können.

Gemäss einer Ausführungsform kann die Distanzmesseinrichtung beispielsweise als Laserdistanzmessgerät ausgebildet sein und dazu konfiguriert sein, die seitlichen Abstände mithilfe eines Laserstrahls, welcher rotierend umlaufend in einer horizontalen Ebene in verschiedene Richtungen ausgerichtet wird, zu messen.

Anders ausgedrückt kann ein Laserdistanzmessgerät als Distanzmesseinrichtung eingesetzt werden und dabei der von dem Laserdistanzmessgerät zur Distanzmessung eingesetzte Laserstrahl in verschiedenen seitlichen Richtungen hin zu den mehreren den Aufzugschacht umgebenden Schachtwänden gerichtet werden, um einen aktuellen seitlichen Abstand zu diesen zu messen. Dabei kann das gesamte Laserdistanzmessgerät in einer horizontalen Ebene rotiert werden. Alternativ kann ein rotierender Spiegel dazu eingesetzt werden, den von dem Laserdistanzmessgerät ausgesendeten Laserstrahl in die verschiedenen seitlichen Richtungen umzulenken. Der Einsatz eines Laserdistanzmessgeräts mit rotierend umlaufendem Laserstrahl kann ein präzises, berührungsloses und zuverlässiges Vermessen des Aufzugschachts ermöglichen.

Gemäss einer Ausführungsform kann die Messvorrichtung ferner eine Höhenmesseinrichtung aufweisen, welche an der Messplattform angebracht ist und welche dazu konfiguriert ist, eine aktuelle Höhenposition der Messplattform innerhalb des Aufzugschachts zu messen.

Anders ausgedrückt kann an der Messplattform eine Messeinrichtung montiert sein, die zusammen mit der Messplattform vertikal durch den Aufzugschacht bewegt wird. Die Messeinrichtung kann hierbei die Höhe, in der sich die Messplattform aktuell innerhalb des Aufzugschachts befindet, ermitteln. Dementsprechend kann zum Vermessen des Aufzugschachts die Messplattform innerhalb des Aufzugschachts vertikal verfahren werden und an verschiedenen Positionen sowohl die seitlichen Abstände hin zu Seitenwänden des Aufzugschachts als auch die aktuelle Höhenposition der Messplattform gemessen werden. Aus den gesammelten Messdaten können anschliessend die gewünschten Informationen über Abmessungen bzw. eine Geometrie des Aufzugschachts entlang seiner Höhenerstreckung abgeleitet werden. Die Höhenposition der Messplattform innerhalb des Aufzugschachts kann dabei mit verschiedenen technischen Methoden ermittelt werden.

Beispielsweise kann gemäss einer konkreten Ausführungsform die Höhenmesseinrichtung dazu konfiguriert sein, die aktuelle Höhenposition der Messplattform mittels einer Luftdruckmessung zu messen.

Der Luftdruck nimmt innerhalb eines Aufzugschachts typischerweise mit zunehmender Höhe ab. Eine Messung des lokal vorherrschenden Luftdrucks kann somit einen Rückschluss auf die aktuelle Höhenposition ermöglichen. Dabei kann es zwar schwierig sein, die aktuelle Höhenposition als absoluten Wert mit hoher Genauigkeit zu ermitteln. Es ist jedoch in der Regel problemlos möglich, Höhenpositionen aufgrund der jeweils gemessenen Luftdrücke relativ zueinander zu sortieren. Anders ausgedrückt kann dadurch, dass bei jeder Messung der seitlichen Abstände hin zu den Seitenwänden auch eine Luftdruckmessung durchgeführt wird, im Nachhinein anhand der gemessenen Luftdrücke rekonstruiert werden, in welcher räumlichen Reihenfolge entlang des Aufzugschachts die einzelnen Abstandsmessungen durchgeführt wurden. Dementsprechend kann aus den Abstandsmessungen ein Profilverlauf, der beispielsweise den Verlauf der Seitenwände wiedergibt, abgeleitet werden. Luftdruckmessungen können im Allgemeinen mithilfe einfacher, kostengünstiger Drucksensoren durchgeführt werden. Dabei können Luftdruckmessungen auch in sehr hohen Aufzügen mit Aufzugschächten von beispielsweise 100 m oder mehr für ein Messen der aktuellen Höhenposition eingesetzt werden.

Alternativ könnte die aktuelle Höhenposition auch mithilfe anderer Technologien gemessen werden. Beispielsweise könnte ein Laserdistanzmessgerät dazu eingesetzt werden, einen aktuellen Abstand der Messplattform von einem Boden oder einer Decke des Aufzugschachts zu messen. Allerdings kann es bei einer solchen optischen Distanzmessung zu Problemen kommen, wenn verhältnismässig grosse Distanzen von beispielsweise mehr als 50 m vermessen werden sollen, beispielsweise aufgrund einer Absorption von Licht des hierzu eingesetzten Laserstrahls an Staubpartikeln innerhalb des zu durchmessenden Aufzugschachtvolumens.

Gemäss einer Ausführungsform kann die Messvorrichtung ferner einen Beschleunigungssensor aufweisen, welcher an der Messplattform angebracht ist und welcher dazu konfiguriert ist, auf die Messplattform wirkende Beschleunigungen zu messen.

Anders ausgedrückt kann an der Messplattform ein Sensor angebracht sein, der sich mit der Messplattform mitbewegt und der dazu in der Lage ist, auf ihn wirkende Beschleunigungen zu ermitteln. Ein solcher Beschleunigungssensor kann Beschleunigungen typischerweise in einer, zwei oder drei Raumrichtungen messen. Durch das Messen der auf die Messplattform wirkenden Beschleunigungen kann beispielsweise auf eine aktuelle Neigung der Messplattform, auf Verschiebungen der Messplattform und/oder auf Vibrationen der Messplattform rückgeschlossen werden. Unter Berücksichtigung dies betreffender Informationen können dann beispielsweise Messergebnisse der Distanzmesseinrichtung mit höherer Genauigkeit interpretiert werden. Insbesondere können Einflüsse auf die Messungen der seitlichen Abstände zu den Seitenwänden des Aufzugschachts, wie sie beispielsweise durch Bewegungen der Messplattform und der daran angebrachten Distanzmesseinrichtung während des Messvorgangs bewirkt werden können, bei der Interpretation der Messungen berücksichtigt werden und beispielsweise herausgerechnet oder kompensiert werden. Gemäss einer Ausführungsform kann die Messvorrichtung ferner ein in dem Aufzugschacht frei hängendes Lot aufweisen. Dabei kann die Distanzmesseinrichtung ergänzend dazu konfiguriert sein, einen seitlichen Abstand hin zu dem Lot zu messen.

Mit anderen Worten kann zusammen mit den bereits bisher beschriebenen Komponenten der Messvorrichtung in dem Aufzugschacht ein Lot, das heisst eine an ihrem unteren Ende mit einem Gewicht beschwerte seilartige Komponente, installiert sein. Im Gegensatz zu den Führungselementen der Messvorrichtung, welche an ihren unteren Enden an unteren Haltepunkten innerhalb des Aufzugschachts befestigt sind und mit Bezug auf diese auf Zug verspannt sind, soll das Lot in dem Aufzugschacht frei hängend installiert sein. Das Lot kann aufgrund der auf es wirkenden Gravitation daher als Referenz die Vertikalrichtung angeben. Die an der Messplattform der Messvorrichtung vorgesehene Distanzmesseinrichtung kann dann dazu konfiguriert sein, nicht nur die seitlichen Abstände hin zu den Seitenwänden des Aufzugschachts zu messen, sondern auch einen seitlichen Abstand hin zu dem Lot zu messen. Der letztgenannte gemessene Abstand kann dann dazu eingesetzt werden, um die Messung der seitlichen Abstände zu kalibrieren. Dies kann insbesondere dann notwendig sein, wenn die Führungselemente innerhalb des Aufzugschachts nicht perfekt lotrecht verlaufen.

Dementsprechend kann durch eine Kalibrierung der gemessenen seitlichen Abstände zu den Seitenwänden unter Berücksichtigung des seitlichen Abstandes zu dem Lot erkannt werden, wenn beispielsweise die Führungselemente in dem Aufzugschacht nicht lotrecht verspannt wurden. Ferner kann beispielsweise auch erkannt werden, wenn zwar der gesamte Aufzugschacht in sich gerade ist und die Führungselemente perfekt parallel zu den Seitenwänden des Aufzugschachts verspannt wurden, der Aufzugschacht jedoch insgesamt mit Bezug auf die Vertikale leicht geneigt ist.

Gemäss einer konkreten Ausführungsform kann die Distanzmesseinrichtung über ein Laserdistanzmessgerät zum Messen des seitlichen Abstandes hin zu dem Lot verfügen.

Mit einem solchen Laserdistanzmessgerät kann der seitliche Abstand hin zu dem Lot mit hoher Präzision ermittelt werden. Dazu kann ein von dem Laserdistanzmessgerät ausgesandter Laserstrahl horizontal auf das Lot gerichtet werden und beispielsweise durch eine Laufzeitmessung oder aufgrund einer Phasenverschiebung auf den seitlichen Abstand zu dem Lot rückgeschlossen werden. Prinzipiell kann es sich bei dem Laserdistanzmessgerät um das gleiche Gerät handeln, mit dem auch die seitlichen Abstände hin zu den Seitenwänden des Aufzugschachts vermessen werden können. Es kann jedoch bevorzugt sein, für die Messung des seitlichen Abstandes hin zu dem Lot ein zum ersten Laserdistanzmessgerät separates, zweites Laserdistanzmessgerät vorzusehen, beispielsweise, da dieses zweite Laserdistanzmessgerät für eine Messung kürzerer Distanzen ausgelegt sein kann, als dies für die Messung der seitlichen Abstände hin zu den Seitenwänden der Fall ist. Dementsprechend kann die Distanzmesseinrichtung gegebenenfalls über zwei separate Laserdistanzmessgeräte verfügen. Das zweite Laserdistanzmessgerät weist insbesondere eine höhere Genauigkeit als das erste Laserdistanzmessgerät auf. Das zweite Laserdistanzmessgerät ist insbesondere als ein so genannter 2D-Laserscanner ausgeführt, mittels welchem ein senkrechter und ein seitlicher Abstand des Laserdistanzmessgeräts zum Lot gemessen werden kann.

Gemäss dem zweiten Aspekt der Erfindung können Ausführungsformen der hierin beschriebenen Messvorrichtung dazu verwendet werden, einen Aufzugschacht auszumessen. Die Messvorrichtung kann hierzu innerhalb des Aufzugschachts installiert werden. Bei einer solchen Installation können die Führungselemente an den oberen und unteren Haltepunkten angebracht und dann zwischen diesen verspannt werden. Ausserdem kann die Hebeeinrichtung in dem Aufzugschacht installiert werden. Die Messplattform kann dann mit der Hebeeinrichtung verbunden werden und mit ihren Führungseinrichtungen in abstützenden Kontakt mit den zuvor installierten Führungselementen gebracht werden. Nach einer solchen Installation der Messvorrichtung kann die Messplattform mithilfe der Hebeeinrichtung an verschiedene Höhenpositionen innerhalb des Aufzugschachts verfahren werden und dort jeweils eine Messung der seitlichen Abstände hin zu den Seitenwänden des Aufzugschachts durchgeführt werden. Gegebenenfalls kann zu jeder solchen Messung auch die aktuelle Höhenposition ermittelt und abgespeichert werden. Aus den gesammelten Messdaten kann anschliessend auf eine Geometrie des Aufzugschachts rückgeschlossen werden.

Es wird darauf hingewiesen, dass einige der möglichen Merkmale und Vorteile der Erfindung hierin mit Bezug auf unterschiedliche Ausführungsformen der Messvorrichtung zum Vermessen eines Aufzugschachts einerseits und einer Verwendung einer solchen Messvorrichtung andererseits beschrieben sind. Ein Fachmann erkennt, dass die Merkmale in geeigneter Weise kombiniert, angepasst oder ausgetauscht werden können, um zu weiteren Ausführungsformen der Erfindung zu gelangen, wobei die Erfindung durch die beigefügten Ansprüche definiert ist.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Messvorrichtung zum Vermessen eines Aufzugschachts gemäss einer Ausführungsform der vorliegenden Erfindung.
Fig. 2 zeigt eine perspektivische Frontansicht auf eine Messplattform für eine Messvorrichtung gemäss einer Ausführungsform der vorliegenden Erfindung.
Fig. 3 zeigt eine perspektivische Rückansicht auf die Messplattform aus Fig. 2.

Die Figuren sind lediglich schematisch und nicht massstabsgetreu. Gleiche Bezugszeichen bezeichnen in den verschiedenen Figuren gleiche oder gleichwirkende Merkmale.

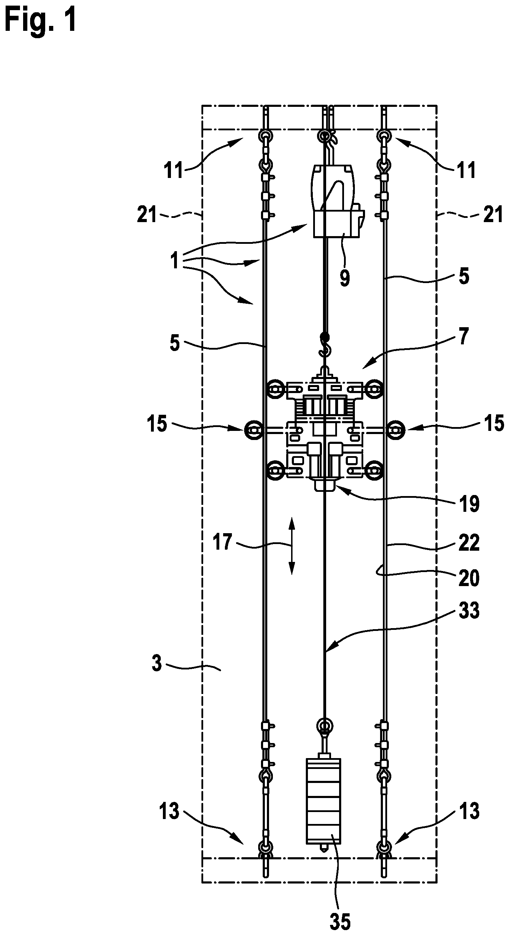

Fig. 1 zeigt eine Ausführungsform einer Messvorrichtung 1, mithilfe derer ein durch Seitenwände 21 begrenzter Aufzugschacht 3 vermessen werden kann. Die Messvorrichtung 1 kann insbesondere schnell und unkompliziert in einem noch nicht fertiggestellten Aufzugschacht 3, d.h. solange sich dieser im Zustand einer Baustelle befindet, installiert werden. Mit der Messvorrichtung 1 kann dann in einfacher und schneller Weise ein Verlauf des Aufzugschachts 3 ermittelt werden. Unter einem Verlauf kann hierbei beispielsweise verstanden werden, wie schief der Aufzugschacht 3 relativ zu einem Lot ist.

Die Messvorrichtung 1 verfügt über zwei seilartige, längliche und parallel zueinander verlaufende Führungselemente 5. Die Führungselemente 5 sind dabei mit ihren gegenüberliegenden Enden jeweils an einem oberen Haltepunkt 11 und einem unteren Haltepunkt 13 angebracht und zwischen den beiden Haltepunkten 11, 13 auf Zug verspannt. Im dargestellten Beispiel können die oberen Haltepunkte 11 in einer Decke des Aufzugschachts 3 verankert sein, wohingegen die unteren Haltepunkte 13 an einem Boden des Aufzugschachts 3 verankert sein können. Die seilartigen Führungselemente 5 werden dabei vorzugsweise derart installiert und verspannt, dass sie im Wesentlichen lotrecht, d.h. vertikal, verlaufen.

Zwischen den derart installierten Führungselementen 5 wird dann eine Messplattform 7 eingesetzt. An der Messplattform 7 sind mehrere Führungseinrichtungen 15 vorgesehen, mithilfe derer sich die Messplattform 7 seitlich an den Führungselementen 5 abstützen kann und die Messplattform 7 bei einer Verlagerungsbewegung in einer insbesondere vertikal verlaufenden Verlagerungsrichtung 17 parallel zu den Führungselementen 5 geführt werden kann.

In dem Aufzugschacht 3 wird ferner eine Hebeeinrichtung 9 installiert, mithilfe derer die Messplattform 7 in der Verlagerungsrichtung 17 bewegt werden kann. Im dargestellten Beispiel ist die Hebeeinrichtung 9 als Seilwinde ausgeführt und an der Decke des Aufzugschachts 3 verankert. Ein Seil der Seilwinde greift hierbei in eine an der Messplattform 7 angebrachte Öse ein. Durch Aufwickeln bzw. Abwickeln des Seils kann dann die Messplattform 7 in der Verlagerungsrichtung 17 in dem Aufzugschacht 3 angehoben oder abgesenkt werden und wird dabei durch ihre Führungseinrichtungen 15 an den Führungselementen 5 geführt.

An der Messplattform 7 ist eine Distanzmesseinrichtung 19 angebracht. Mithilfe dieser Distanzmesseinrichtung 19 können seitliche Abstände hin zu Seitenwänden 21 des Aufzugschachts 3 gemessen werden.

In dem Aufzugschacht 3 ist ferner ein Lot 33 vorgesehen. Eine seilartige Komponente dieses Lot 33 ist oben in der Decke des Aufzugschachts 3 verankert und an ihrem unteren Ende mit einem Gewicht 35 beschwert.

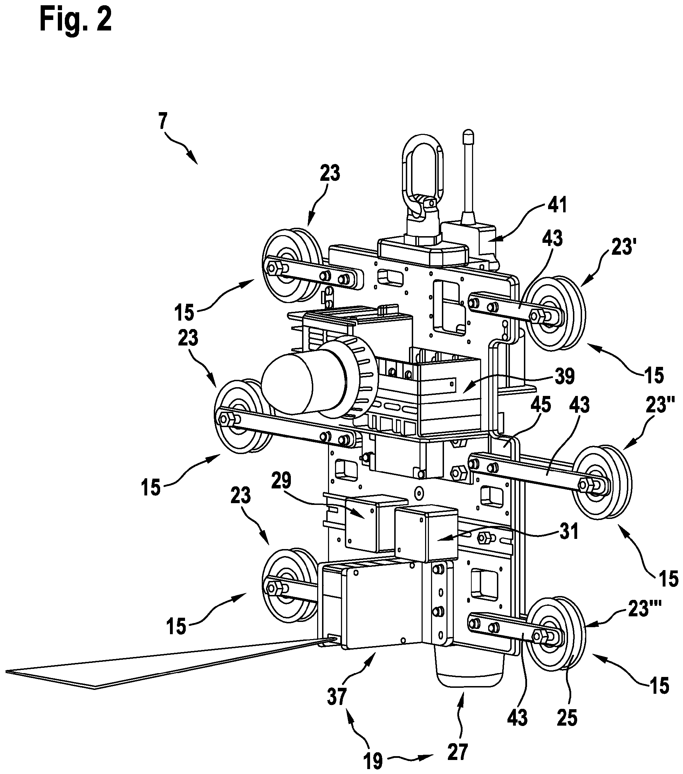

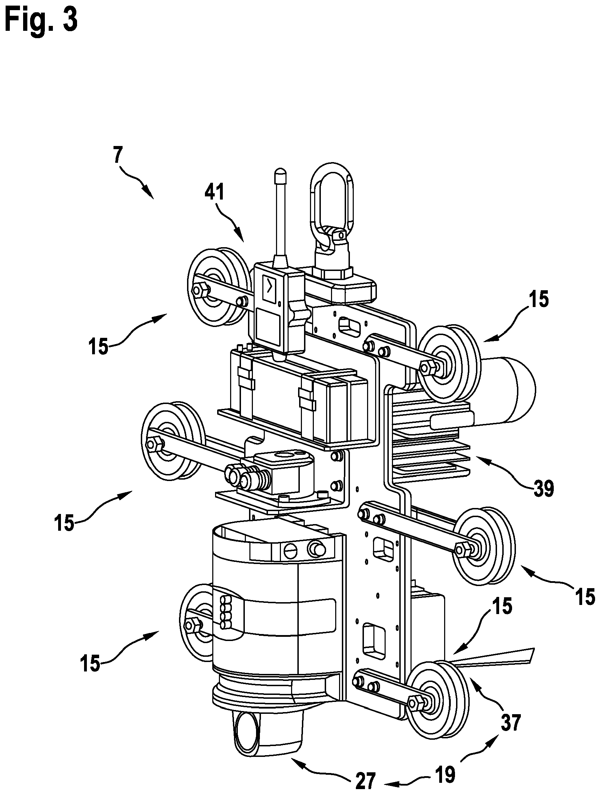

In den Fign. 2 und 3 sind spezifische Ansichten auf eine Ausgestaltung der Messplattform 7 der Messvorrichtung 1 dargestellt.

Bei der dargestellten Ausgestaltung ist an gegenüberliegenden Seiten der Messplattform 7 jeweils eine Führungseinrichtung 15 angeordnet. Jede der Führungseinrichtungen 15 weist hierbei drei Rollen 23 auf, die über horizontal verlaufende Streben 43 an einem Zentralkörper 45 der Messplattform 7 angebracht sind.

Die drei Rollen 23 sind dabei in unterschiedlichen seitlichen Abständen bezogen auf den Zentralkörper 45 angeordnet. Eine oberste Rolle 23' und eine unterste Rolle 23‴ sind näher an dem Zentralkörper 45 angeordnet als eine vertikal dazwischenliegende mittlere Rolle 23" . Dadurch sind die drei Rollen 23 derart angeordnet, dass die oberste Rolle 23' und die unterste Rolle 23‴ während der Verlagerungsbewegung mit ihrer Umfangsoberfläche 25 an einer ersten, hin zu dem Zentralkörper 45 gerichteten Oberfläche 20 eines Führungselements 5 (in Fig. 2 und 3 nicht dargestellt) entlang rollt, wohingegen die mittlere Rolle 23" an einer zweiten, weg von dem Zentralkörper 45 gerichteten entgegengesetzten Oberfläche 22 des Führungselements 5 entlang rollt. Die verschiedenen Rollen 23 einer Führungseinrichtung 15 nehmen somit das seilartige gespannte Führungselement 5 zwischen sich auf und können so für eine zuverlässige Führung der Messplattform 7 entlang des Führungselements 5 sorgen.

Ergänzend sind die Umfangsoberflächen 25 der Rollen 23 konkav ausgestaltet, sodass eine Führung der Messplattform 7 nicht nur in einer von den Führungseinrichtungen 15 definierten Ebene, sondern auch quer zu dieser Ebene, bewirkt werden kann.

Bei der dargestellten Ausführungsform ist die Distanzmesseinrichtung 19 mit einem ersten Laserdistanzmessgerät 27 und einem zweiten Laserdistanzmessgerät 37 ausgebildet.

Das erste Laserdistanzmessgerät 27 ist als rotierender 2D-Laser dazu konfiguriert, einen Laserstrahl rotierend umlaufend in einer horizontalen Ebene in verschiedene Richtungen auszusenden und mithilfe des Laserstrahls seitliche Abstände hin zu zumindest einer der Seitenwände 21 (siehe Fig. 1) des Aufzugschachts 3 zu messen. Mithilfe dieses ersten Laserdistanzmessgeräts 27 kann somit beispielsweise ein Querschnitt des Aufzugschachts 3 an verschiedenen Höhenpositionen vermessen werden.

Das zweite, nur optional vorzusehende Laserdistanzmessgerät 37 kann dazu eingesetzt werden, einen seitlichen Abstand hin zu dem Lot 33 (siehe Fig. 1) zu messen, um anhand dieses Messwertes beispielsweise die von dem ersten Laserdistanzmessgerät 27 ermittelten Messwerte kalibrieren bzw. dessen Fehler kompensieren zu können. Insbesondere lässt sich mithilfe der von dem zweiten Laserdistanzmessgerät 37 ermittelten Messwerte ermitteln, wie genau die Führungselemente 5 im Lot stehen. Das zweite Laserdistanzmessgerät 37 ist insbesondere als ein 2D-Laserscanner ausgeführt.

Die Messplattform 7 verfügt ferner über eine Höhenmesseinrichtung 29, mithilfe derer eine aktuelle Höhenposition der Messplattform 7 innerhalb des Aufzugschachts 3 gemessen werden kann. Die Höhenmesseinrichtung 29 kann insbesondere über einen Luftdrucksensor verfügen, mithilfe dessen ein lokal vorherrschender Luftdruck gemessen werden kann und aus dem gemessenen Luftdruck auf eine aktuelle Höhenposition rückgeschlossen werden kann.

Ausserdem ist an der Messplattform 7 ein Beschleunigungssensor 31 vorgesehen, mithilfe dessen Beschleunigungen, die auf die Messplattform 7 wirken, gemessen werden können. Hierdurch können beispielsweise Vibrationen oder Verschiebungen der Messplattform 7 gemessen werden, um die Messergebnisse von deren Distanzmesseinrichtung 19 noch besser interpretieren zu können.

Um den Aufzugschacht 3 unter Verwendung der Messvorrichtung 1 vermessen zu können, kann die Messplattform 7 der zuvor vollständig installierten Messvorrichtung 1 an verschiedene Höhenpositionen innerhalb des Aufzugschachts 3 verfahren werden. An jeder der Höhenpositionen können dann mithilfe der Distanzmesseinrichtung 19 seitliche Abstände hin zu einer oder mehreren der Seitenwände 21 des Aufzugschachts 3 gemessen werden. Aus solchen Messungen können beispielsweise Querschnitte des Aufzugschachts 3 ermittelt werden, die bei einer Datenauswertung zum Beispiel derart übereinandergelegt werden können, dass die Führungselemente 5 bzw. die Messplattform 7 immer an einem selben horizontalen Ort zu liegen kommt. Auf diese Weise können relative Abweichungen von Querschnitt zu Querschnitt ermittelt werden.

Ein Betrieb der Messplattform 7 bzw. der daran angeordneten Komponenten, insbesondere der Distanzmesseinrichtung 19 mit ihren ersten und zweiten Laserdistanzmessgeräten 27, 37, ihrer Höhenmesseinrichtung 29 und ihrem Beschleunigungssensor 31 können dabei von einer Steuereinheit 39 gesteuert bzw. koordiniert werden. Ermittelte Messergebnisse können gegebenenfalls über eine Datenübertragungseinheit 41 beispielsweise drahtlos an eine externe Auswerteeinheit (nicht dargestellt) übermittelt werden.

Abschliessend ist darauf hinzuweisen, dass Begriffe wie "aufweisend", "umfassend", etc. keine anderen Elemente oder Schritte ausschliessen und Begriffe wie "eine" oder "ein" keine Vielzahl ausschliessen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Der Schutzumfang der Erfindung wird durch die beigefügten Ansprüche bestimmt. Bezugszeichen in den Ansprüchen sind nicht als Einschränkung anzusehen.

## Patentansprüche

1. Messvorrichtung zum Vermessen eines Aufzugschachts (3), wobei die Messvorrichtung (1) aufweist:
- zwei seilartige, längliche und parallel zueinander verlaufende Führungselemente (5);
- eine Messplattform (7);
- eine Hebeeinrichtung (9);
wobei jedes der Führungselemente (5) jeweils an einem oberen Haltepunkt (11) und an einem unteren Haltepunkt (13) in dem Aufzugschacht (3) fest angebracht und zwischen dem oberen Haltepunkt (11) und dem unteren Haltepunkt (13) verspannt ist;
wobei die Messplattform (7) über Führungseinrichtungen (15) verfügt, welche die Messplattform (7) seitlich an den Führungselementen (5) abstützen und die Messplattform (7) bei einer Verlagerungsbewegung in einer Verlagerungsrichtung (17) parallel zu den Führungselementen (5) fuhren;
wobei die Messplattform (7) über eine Distanzmesseinrichtung (19) verfügt, um seitliche Abstände hin zu Seitenwänden (21) des Aufzugschachts (3) zu messen;
wobei die Hebeeinrichtung (9) dazu konfiguriert ist, die Messplattform (7) in der Verlagerungsrichtung (17) zu bewegen
**dadurch gekennzeichnet, dass**
die Führungseinrichtungen (15) jeweils wenigstens drei Rollen (23, 23', 23", 23‴) aufweisen, welche derart angeordnet sind, dass zumindest eine erste der Rollen (23, 23', 23‴) während der Verlagerungsbewegung mit ihrer Umfangsoberfläche (25) entlang einer ersten Oberfläche (20) eines der Führungselemente (5) rollt und zumindest eine zweite der Rollen (23, 23") während der Verlagerungsbewegung mit ihrer Umfangsoberfläche (25) entlang einer der ersten Oberfläche (20) entgegengesetzten zweiten Oberfläche (22) desselben Führungselements (5) rollt.

2. Messvorrichtung nach Anspruch 1, wobei an der Messplattform (7) an gegenüberliegenden Seiten jeweils wenigstens eine Führungseinrichtung (15) angeordnet ist.

3. Messvorrichtung nach einem der Ansprüche 1 und 2, wobei die Umfangsflächen (25) der Rollen (23, 23', 23", 23‴) konkav sind.

4. Messvorrichtung nach einem der vorangehenden Ansprüche, wobei die Führungselemente (5) zumindest teilweise mit einem nicht-metallischen Material ausgebildet sind.

5. Messvorrichtung nach einem der vorangehenden Ansprüche, wobei die Distanzmesseinrichtung (19) dazu konfiguriert ist, die seitlichen Abstände berührungslos zu messen.

6. Messvorrichtung nach einem der vorangehenden Ansprüche, wobei die Distanzmesseinrichtung (19) dazu konfiguriert ist, die seitlichen Abstände in verschiedenen seitlichen Richtungen zu messen.

7. Messvorrichtung nach einem der vorangehenden Ansprüche, wobei die Distanzmesseinrichtung (19) als Laserdistanzmessgerät (27) ausgebildet ist und dazu konfiguriert ist, die seitlichen Abstände mithilfe eines Laserstrahls, welcher rotierend umlaufend in einer horizontalen Ebene in verschiedene Richtungen ausgerichtet wird, zu messen.

8. Messvorrichtung nach einem der vorangehenden Ansprüche, ferner aufweisend eine Höhenmesseinrichtung (29), welche an der Messplattform (7) angebracht ist und welche dazu konfiguriert ist, eine aktuelle Höhenposition der Messplattform (7) innerhalb des Aufzugschachts (3) zu messen.

9. Messvorrichtung nach Anspruch 8, wobei die Höhenmesseinrichtung (29) dazu konfiguriert ist, die aktuelle Höhenposition der Messplattform (7) mittels einer Luftdruckmessung zu messen.

10. Messvorrichtung nach einem der vorangehenden Ansprüche, ferner aufweisend einen Beschleunigungssensor (31), welcher an der Messplattform (7) angebracht ist und welcher dazu konfiguriert ist, auf die Messplattform (7) wirkende Beschleunigungen zu messen.

11. Messvorrichtung nach einem der vorangehenden Ansprüche, ferner aufweisend ein in dem Aufzugschacht (3) frei hängendes Lot (33), wobei die Distanzmesseinrichtung (19) ergänzend dazu konfiguriert ist, einen seitlichen Abstand hin zu dem Lot (33) zu messen.

12. Messvorrichtung nach Anspruch 11, wobei die Distanzmesseinrichtung (19) über ein Laserdistanzmessgerät (37) zum Messen des seitlichen Abstandes hin zu dem Lot (33) verfügt.

13. Verwendung der Messvorrichtung (1) gemäss einem der Ansprüche 1 bis 12 zum Ausmessen eines Aufzugschachts (3).

## Claims

1. Measuring device for measuring an elevator shaft (3), the measuring device (1) comprising:
- two cable-like, elongate guide elements (5) which extend in parallel with one another;
- a measuring platform (7);
- a lifting apparatus (9);
each of the guide elements (5) being fixedly attached to an upper holding point (11) and a lower holding point (13) in the elevator shaft (3) and being tensioned between the upper holding point (11) and the lower holding point (13);
the measuring platform (7) having guide apparatuses (15) which laterally support the measuring platform (7) on the guide elements (5) and guide the measuring platform (7) parallel to the guide elements (5) during a displacement movement in a displacement direction (17);
the measuring platform (7) having a distance measuring apparatus (19) in order to measure lateral distances to the lateral walls (21) of the elevator shaft (3);
the lifting apparatus (9) being configured to move the measuring platform (7) in the displacement direction (17)
**characterized in that**
the guide apparatuses (15) each have at least three rollers (23, 23', 23", 23‴) which are arranged such that at least a first of the rollers (23, 23', 23‴) rolls with the circumferential surface (25) thereof along a first surface (20) of one of the guide elements (5) during the displacement movement, and at least a second of the rollers (23, 23") rolls with the circumferential surface (25) thereof along a second surface (22) of the same guide element (5), which is opposite the first surface (20), during the displacement movement.

2. Measuring device according to claim 1, wherein at least one guide apparatus (15) is arranged in each case on opposite sides of the measuring platform (7).

3. Measuring device according to either of claims 1 and 2, wherein the circumferential surfaces (25) of the rollers (23, 23', 23", 23‴) are concave.

4. Measuring device according to any of the preceding claims, wherein the guide elements (5) are at least partially formed using a non-metal material.

5. Measuring device according to any of the preceding claims, wherein the distance measuring apparatus (19) is configured to measure the lateral distances in a contactless manner.

6. Measuring device according to any of the preceding claims, wherein the distance measuring apparatus (19) is configured to measure the lateral distances in different lateral directions.

7. Measuring device according to any of the preceding claims, wherein the distance measuring apparatus (19) is designed as a laser distance measuring device (27) and is configured to measure the lateral distances using a laser beam which is rotatingly oriented in different directions in a horizontal plane.

8. Measuring device according to any of the preceding claims, further comprising a height measuring apparatus (29) which is attached to the measuring platform (7) and which is configured to measure a current height position of the measuring platform (7) within the elevator shaft (3).

9. Measuring device according to claim 8, wherein the height measuring apparatus (29) is configured to measure the current height position of the measuring platform (7) by means of an air pressure measurement.

10. Measuring device according to any of the preceding claims, further comprising an acceleration sensor (31) which is attached to the measuring platform (7) and which is configured to measure accelerations acting on the measuring platform (7).

11. Measuring device according to any of the preceding claims, further comprising a plumb line (33) hanging freely in the elevator shaft (3), wherein the distance measuring apparatus (19) is additionally configured to measure a lateral distance to the plumb line (33).

12. Measuring device according to claim 11, wherein the distance measuring apparatus (19) has a laser distance measuring device (37) for measuring the lateral distance to the plumb line (33).

13. Use of the measuring device (1) according to any of claims 1 to 12 for measuring an elevator shaft (3).

## Revendications

1. Dispositif de mesure permettant de mesurer une cage d'ascenseur (3), le dispositif de mesure (1) comportant :
- deux éléments de guidage (5) allongés en forme de câble et s'étendant parallèlement l'un à l'autre ;
- une plate-forme de mesure (7) ;
- un appareil de levage (9) ;
chacun des éléments de guidage (5) étant fixé rigidement à un point de support supérieur (11) et à un point de support inférieur (13), respectivement, dans la cage d'ascenseur (3) et étant serré entre le point de support supérieur (11) et le point de support inférieur (13) ; la plate-forme de mesure (7) disposant d'appareils de guidage (15) qui soutiennent la plate-forme de mesure (7) latéralement au niveau des éléments de guidage (5) et qui guident la plate-forme de mesure (7) parallèlement aux éléments de guidage (5) lors d'un mouvement de déplacement dans une direction de déplacement (17) ;
la plate-forme de mesure (7) disposant d'un appareil de mesure de distance (19) permettant de mesurer des distances latérales vers des parois latérales (21) de la cage d'ascenseur (3) ;
l'appareil de levage (9) étant conçu pour déplacer la plate-forme de mesure (7) dans la direction de déplacement (17)
**caractérisé en ce que**
les appareils de guidage (15) comportent respectivement au moins trois galets (23, 23', 23", 23‴) qui sont disposés de telle sorte qu'au moins un premier des galets (23, 23', 23‴) roule pendant le mouvement de déplacement avec sa surface circonférentielle (25) le long d'une première surface (20) d'un des éléments de guidage (5) et au moins un deuxième des galets (23, 23") roule pendant le mouvement de déplacement avec sa surface circonférentielle (25) le long d'une seconde surface (22) dudit élément de guidage (5) opposée à la première surface (20).

2. Dispositif de mesure selon la revendication 1, dans lequel respectivement au moins un appareil de guidage (15) est disposé sur des côtés opposés de la plate-forme de mesure (7).

3. Dispositif de mesure selon l'une des revendications 1 et 2, dans lequel les surfaces circonférentielles (25) des galets (23, 23', 23", 23"') sont concaves.

4. Dispositif de mesure selon l'une des revendications précédentes, dans lequel les éléments de guidage (5) sont réalisés au moins en partie à partir d'un matériau non métallique.

5. Dispositif de mesure selon l'une des revendications précédentes, dans lequel l'appareil de mesure de distance (19) est configuré pour mesurer les distances latérales sans contact.

6. Dispositif de mesure selon l'une des revendications précédentes, dans lequel l'appareil de mesure de distance (19) est configuré pour mesurer les distances latérales dans différentes directions latérales.

7. Dispositif de mesure selon l'une des revendications précédentes, dans lequel l'appareil de mesure de distance (19) est réalisé sous la forme d'un appareil de mesure de distance laser (27) et est configuré pour mesurer les distances latérales à l'aide d'un faisceau laser qui est orienté en rotation dans un plan horizontal dans différentes directions.

8. Dispositif de mesure selon l'une des revendications précédentes, comportant en outre un appareil de mesure de hauteur (29) qui est fixé à la plate-forme de mesure (7) et qui est configuré pour mesurer une position de hauteur actuelle de la plate-forme de mesure (7) à l'intérieur de la cage d'ascenseur (3).

9. Dispositif de mesure selon la revendication 8, dans lequel l'appareil de mesure de hauteur (29) est configuré pour mesurer la position de hauteur actuelle de la plate-forme de mesure (7) au moyen d'une mesure de pression d'air.

10. Dispositif de mesure selon l'une des revendications précédentes, comportant en outre un capteur d'accélération (31) qui est fixé à la plate-forme de mesure (7) et qui est configuré pour mesurer des accélérations agissant sur la plate-forme de mesure (7).

11. Dispositif de mesure selon l'une des revendications précédentes, comportant en outre un fil à plomb (33) suspendu librement dans la cage d'ascenseur (3), dans lequel l'appareil de mesure de distance (19) est en outre configuré pour mesurer une distance latérale vers le fil à plomb (33).

12. Dispositif de mesure selon la revendication 11, dans lequel l'appareil de mesure de distance (19) dispose d'un appareil de mesure de distance laser (37) permettant de mesurer la distance latérale vers le fil à plomb (33).

13. Utilisation du dispositif de mesure (1) selon l'une des revendications 1 à 12 pour la mesure d'une cage d'ascenseur (3).
